# EUROPEAN PATENT APPLICATION

(11) **EP 3 076 309 A1**
(43) Date of publication of application: **05.10.2016**
(21) Application number: 15196266.9
(22) Date of filing: 25.11.2015
(51) Int. Cl.: G06F 17/30

(54) **PROGRAMMABLE LOGIC CONTROLLER, DATA COLLECTION APPARATUS, DATABASE ACCESS METHOD, AND DATABASE ACCESS PROGRAM**

(30) Priority: 31.03.2015 JP 2015074291
(71) Applicant: OMRON CORPORATION, Kyoto, Kyoto 600-8530 (JP)
(72) Inventor: OKAMURA, Kotaro, Kyoto, Kyoto 600-8530 (JP)
(74) Representative: Horn Kleimann Waitzhofer Patentanwälte PartG mbB

(57) **Abstract**

A plurality of records are collectively manipulated with a simple structure, in a technology for manipulating a database without having to formulate SQL statements. A database access unit (120) of a programmable logic controller (100) generates an SQL statement for manipulating a plurality of records, with reference to a plurality of structure data included in a data group generated by an execution unit (110) and definition data representing a definition of the structure data, and executes the SQL statement.

## Description

### FIELD

The present invention relates to a programmable logic controller, a data collection apparatus, database access methods of the programmable logic controller and the data collection apparatus, and database access programs for the programmable logic controller and the data collection apparatus.

### BACKGROUND

The inventors have developed a technology that enables programming, including manipulation of a database, without having to formulate SQL statements for database manipulation (WO/2013/191275 (publication date: 27.12.2013)).

With the technology described in WO/2013/191275, a programmable logic controller capable of accessing a database stores structure definition information and a user program including the data of a structure. A sequence instruction program sequentially executes instructions of the user program, and calls a DB access program in order to access the database. The DB access program reads out the structure definition information, and generates an SQL statement to be used when the database is accessed through execution of the user program, based on the read structure definition information. The DB access program executes the generated SQL statement.

WO/2013/191275 is an example of background art.

### SUMMARY

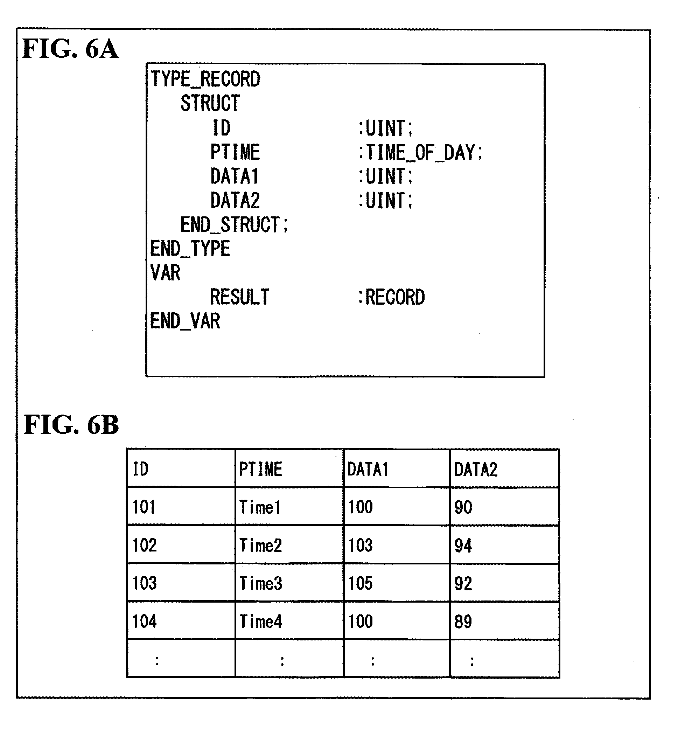

With the technology described in WO/2013/191275, the data of records is set in a structure and written to the database one record at a time. For example, when structure data "RESULT" with a model name "RECORD" and having a member "ID", a member "PTIME", a member "DATA1" and a member "DATA2" is defined, as shown in Fig. 6A, one record can be inserted into a "results storage table" shown in Fig. 6B, by setting a value for each member of the structure data "RESULT".

However, when predetermined results data is collected and written to a database in a factory or the like, for example, it can be the case that the collection cycle of the results data is shorter than the time required to write the data to the database. In this case, because writing to the database falls behind, it could happen that desired results data cannot be written to the database.

In order to address such a problem, a method is conceivable in which the data of a plurality of records is processed so as to be collectively adapted to one record, and the processed data is set in a structure and written to the database, and subsequently, on the database side, this one collective record is separated into the original plurality of records (reference technology).

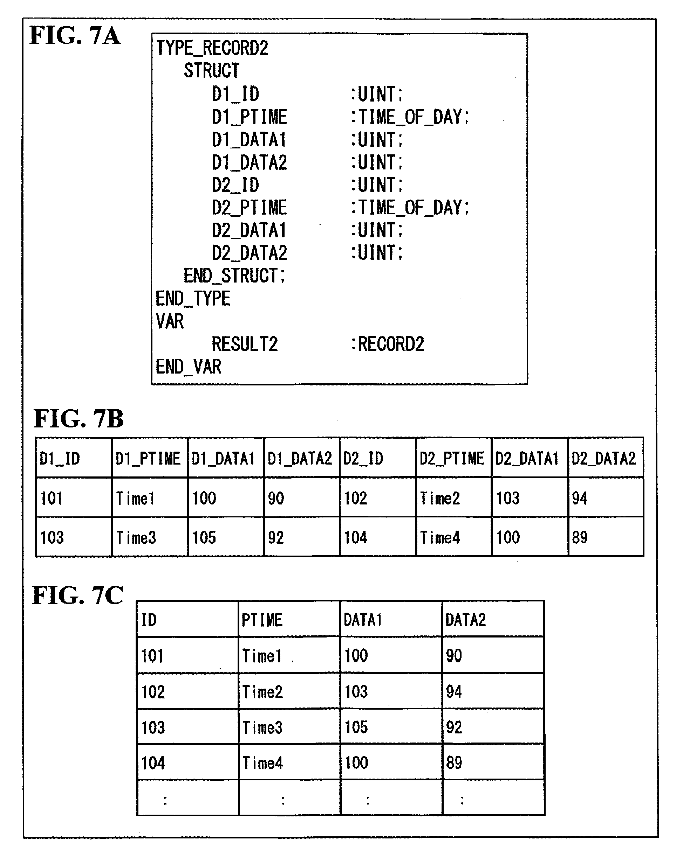

For example, when a structure "RESULT2" with a model name "RECORD2" and having a member "D1_ID", a member "D1_PTIME", a member "D1_DATA1" and a member "D1_DATA2" that correspond to a first record and a member "D2_ID", a member "D2_PTIME", a member "D2_DATA1" and a member "D2_DATA2" that correspond to a second record is defined, as shown in Fig. 7A, the data of two records can be inserted as one record into a "temporary results storage table" shown in Fig. 7B, by setting a value for each member of the structure "RESULT2". A "results storage table" shown in Fig. 7C can then be created, by separating the data stored in one record in the "temporary results storage table" into two records using a user program on the database side.

Desired results data thus can also be successfully written to a database in the above-mentioned case, by collectively manipulating a plurality of records.

With this method, a user program does, however, need to be devised on the database side, complicating the processing. Also, it is extremely difficult to construct a system in consideration of both the programmable logic controller side and the database side.

The present invention was made in view of the above problems, and has a main object to collectively manipulate a plurality of records with a simple structure, in a technology for manipulating a database without having to formulate SQL statements.

In order to solve the above problems, a programmable logic controller according to the present invention is a programmable logic controller configured to access a database, the controller including a generation unit configured to generate structure data defining a single record, and to generate a data group including a plurality of the generated structure data, a storage unit configured to store definition data representing a definition of the structure data, and a database access unit configured to generate an SQL statement for manipulating a plurality of records, with reference to the plurality of structure data included in the data group generated by the generation unit and the definition data stored in the storage unit, and to execute the SQL statement. Here, "manipulate" can refer to adding, inserting, deleting or changing database records, but is not limited thereto.

According to the above configuration, a plurality of structure data that each specify a single record are included in the data group that is generated by the generation unit. Therefore, the database access unit is able to recognize the plurality of records, by referring to the data group. Also, the database access unit is able to recognize definitions of the records by referring to the definition data of the structure data. The database access unit is thereby able to generate an SQL statement for manipulating a plurality of records corresponding to each of a plurality of structure data that are included in a data group, and to manipulate the plurality of records by executing the SQL statement. According to the above configuration, a plurality of records can thus be collectively manipulated with a simple structure, in a technology for manipulating a database without having to formulate SQL statements.

In the programmable logic controller according to the present invention, the data group may include array data in which the plurality of structure data are arrayed and number data indicating a number of the plurality of structure data.

According to the above configuration, the database access unit is able to recognize the number of structure data that are included in a data group. Also, the plurality of structure data are stored in array data, thus enabling the generation unit to readily include the plurality of structure data in a data group, and the database access unit to readily read out individual structure data. The database access unit is thereby readily able to create the SQL statement.

In the programmable logic controller according to the present invention, the generation unit, the generation unit may be configured to generate the structure data in a shorter interval than a time that the database access unit takes to execute the SQL statement.

According to the above configuration, the generation unit generates structure data in a shorter interval than the time that the database access unit takes to execute an SQL statement, and thus manipulation of the database could possibly fall behind if the data of records is set in a structure and the database is manipulated one record at a time, such as with the conventional technology. However, according to the present invention, a plurality of records can be collectively manipulated, thus enabling manipulation of the database corresponding to the generated structure data to be performed successfully, even when the generation unit generates structure data in a shorter interval than the time that the database access unit takes to execute the SQL statement.

In the programmable logic controller according to the present invention, the SQL statement may request insertion or updating of the plurality of records.

According to the above configuration, the insertion or updating of a plurality of records can be collectively performed.

A data collection apparatus according to the present invention is a data collection apparatus configured to be connected to a programmable logic controller and to access a database, the apparatus including an acquisition unit configured to acquire data from the programmable logic controller, a generation unit configured to generate structure data defining a single record from the data acquired by the acquisition unit, and to generate a data group including a plurality of the generated structure data, a storage unit configured to store definition data representing a definition of the structure data, and a database access unit configured to generate an SQL statement for manipulating a plurality of records, with reference to the plurality of structure data included in the data group generated by the generation unit and the definition data stored in the storage unit, and to execute the SQL statement.

According to the above configuration, the data collection apparatus acquires data from a programmable logic controller, generates structure data from the acquired data, generates a data group including a plurality of generated structure data, generates an SQL statement for manipulating a plurality of records, with reference to the data group and definition data, and executes the SQL statement, thus achieving effects equivalent to the programmable logic controller according to the present invention.

A database access method according to the present invention is a database access method of a programmable logic controller configured to access a database, the method including a generation step of the programmable logic controller generating structure data defining a single record, and generating a data group including a plurality of the generated structure data, and a database access step of the programmable logic controller generating an SQL statement for manipulating a plurality of records, with reference to the plurality of structure data included in the data group generated in the generation step and definition data that represents a definition of the structure data, and executing the SQL statement.

Also, a database access program according to the present invention is a database access program for causing a programmable logic controller configured to access a database to execute a generation step of generating structure data defining a single record, and generating a data group including a plurality of the generated structure data, and a database access step of generating an SQL statement for manipulating a plurality of records, with reference to the plurality of structure data included in the data group generated in the generation step and definition data that represents a definition of the structure data, and executing the SQL statement.

According to the above configurations, effects equivalent to the programmable logic controller according to the present invention are achieved.

A database access method according to the present invention is a database access method of a data collection apparatus configured to be connected to a programmable logic controller and to access a database, the method including an acquisition step of the data collection apparatus acquiring data from the programmable logic controller, a generation step of the data collection apparatus generating structure data defining a single record from the data acquired in the acquisition step, and generating a data group including a plurality of the generated structure data, and a database access step of the data collection apparatus generating an SQL statement for manipulating a plurality of records, with reference to the plurality of structure data included in the data group generated in the generation step and definition data that represents a definition of the structure data, and executing the SQL statement.

Also, a database access program according to the present invention is a database access program for causing a computer connected to a programmable logic controller and configured to access a database to execute an acquisition step of acquiring data from the programmable logic controller, a generation step of generating structure data defining a single record from the data acquired in the acquisition step, and generating a data group including a plurality of the generated structure data, and a database access step of generating an SQL statement for manipulating a plurality of records, with reference to the plurality of structure data included in the data group generated in the generation step and definition data that represents a definition of the structure data, and executing the SQL statement.

According to the above configurations, effects equivalent to the data collection apparatus according to the present invention are achieved.

According to the present invention, a plurality of records can be collectively manipulated with a simple structure, in a technology for manipulating a database without having to formulate SQL statements.

### BRIEF DESCRIPTION OF THE DRAWINGS

Fig. 1 is a block diagram showing a schematic configuration of a programmable logic controller according to Embodiment 1 of the present invention.
Figs. 2A and 2B are diagrams illustrating Embodiment 1 of the present invention, with Fig. 2A showing exemplary definitions of structure data and a data group, and Fig. 2B showing an exemplary table that is manipulated using the data group.
Fig. 3 is a flowchart illustrating a database access method according to Embodiment 1 of the present invention.
Fig. 4 is a block diagram showing a schematic configuration of a data collection apparatus according to Embodiment 2 of the present invention.
Fig. 5 is a flowchart illustrating a database access method according to Embodiment 2 of the present invention.
Figs. 6A and 6B are diagrams illustrating a conventional technology, with Fig. 6A showing an exemplary definition of structure data, and Fig. 6B showing an exemplary table that is manipulated using the structure data.
Figs. 7A to 7C are diagrams illustrating a reference technology, with Fig. 7A showing an exemplary definition of structure data, and Figs. 7B and 7C showing exemplary tables that are manipulated using the structure data.

### DETAILED DESCRIPTION

### Embodiment 1

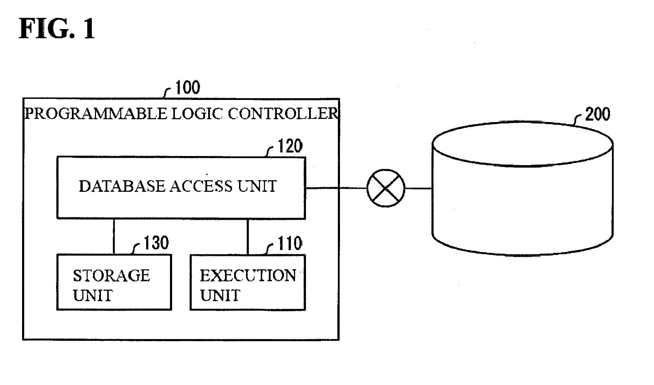

The present invention, in one embodiment (Embodiment 1), provides a programmable logic controller capable of accessing a database. Fig. 1 is a block diagram showing a schematic configuration of a programmable logic controller 100 according to Embodiment 1. As shown in Fig. 1, the programmable logic controller 100 is connected to a database 200. The database 200, in the present embodiment, is constructed in a DB server provided with a DBMS (database management system), but is not limited thereto.

Note that, in the present embodiment, the programmable logic controller 100 is connected via a network to the DB server storing the database 200. The present invention is, however, not limited thereto, and the programmable logic controller 100 and the DB server storing the database 200 may be connected via a cable directly or via wireless communication. Also, as a modification, the database 200 may be stored in the programmable logic controller 100.

The programmable logic controller 100 is a computer system, and is configured to repeatedly execute a user program. In particular, the programmable logic controller 100 is able to execute a user program periodically in accordance with a preset time (cycle time). The programmable logic controller 100 reads and writes information with respect to a memory area in the programmable logic controller 100, and executes instructions shown in the user program in order. The programmable logic controller 100 is provided with an input/output function, and accepts and stores data such as sensor output from outside the programmable logic controller 100. The programmable logic controller 100 transmits stored data to the DB server.

As shown in Fig. 1, the programmable logic controller 100 is provided with an execution unit (generation unit) 110, a database access unit 120, and a storage unit 130. The execution unit 110 executes an OS, system programs, and user programs. Parts of the OS and the system programs that relate to database access are, however, executed by the database access unit 120.

The OS is an operating system that manages the resources of the programmable logic controller 100, and performs task scheduling. The system programs operate on the OS and exhibit functions such as control of ladder programs. The system programs include a sequence instruction program, an input/output program, and a scheduler, for example. The sequence instruction program executes the instructions of a user program in order, while reading and writing information with respect to a memory area in the programmable logic controller 100. The input/output program controls data input to the programmable logic controller 100 and data output from the programmable logic controller 100 using a plurality of input/output functions that are provided in the programmable logic controller 100. Each input/output function is assigned an address in memory. Data that is held in the memory corresponding to each input/output function is collectively exchanged with data outside the programmable logic controller 100, in accordance with the cycle time. The scheduler performs task scheduling, based on the priorities of tasks to be executed by the programmable logic controller 100.

The execution unit 110, by executing the user program, generates structure data defining a single record to be registered in the database 200 based on data acquired from an external sensor or the like, and generates a data group including a plurality of generated structure data. The execution unit 110 then designates the generated data group and calls the database access unit 120, in order to access the database 200. This can, for example, be executed by a predetermined function or method being called in a control program. The database access unit 120, when called, executes an SQL statement, with reference to the data group including a plurality of structure data, by executing a system program relating to database access, and realizes access to the database 200.

Also, as one modification, the database access unit 120 may be automatically called when the execution unit 110 generates a data group.

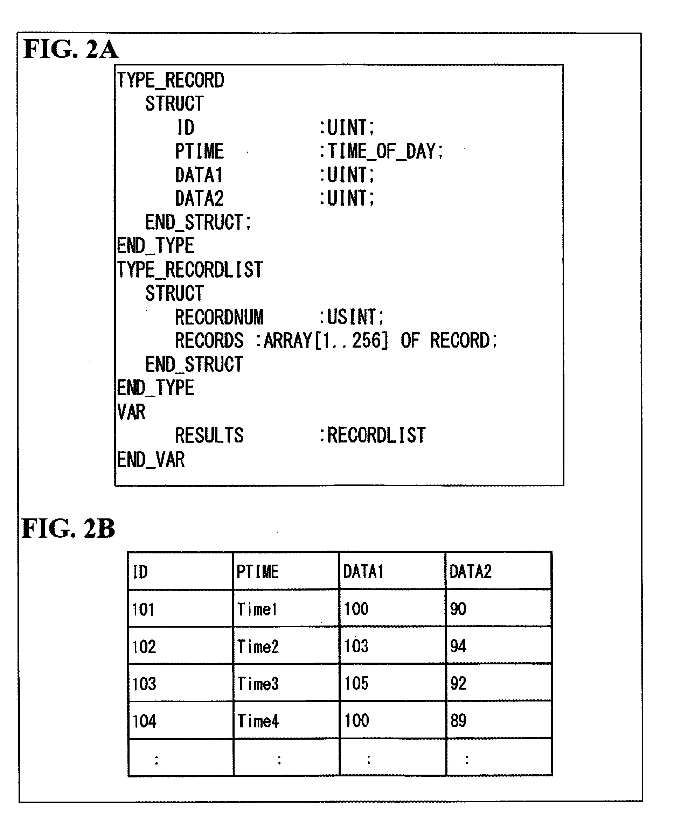

Fig. 2A is a diagram showing exemplary definitions of structure data and a data group. In the example shown in Fig. 2A, structure data defining a single record is structure data with a model name "RECORD" and having a member "ID", a member "PTIME", a member "DATA1" and a member "DATA2", and a data group including a plurality of structure data is a data group "RESULTS" with a model name "RECORDLIST" and composed of an array "RECORDS" of the structure data with the model name "RECORD" and a number "RECORDNUM" indicating the number of structure data stored in the array "RECORDS".

Note that in this specification, "structure data" means a collection of data that has been given meaning.

Fig. 2B is a diagram showing an exemplary table that is manipulated using the data group "RESULTS". The "results storage table" shown in Fig. 2B has a field "ID", a field "PTIME", a field "DATA1" and a field "DATA2", and each of these fields corresponds to a different member of the structure data. Therefore, a single record is defined by structure data.

Although the method by which the execution unit 110 generates structure data and data groups is not particularly limited, as one embodiment, the execution unit 110 may generate structure data periodically or aperiodically, and may generate the data group "RESULTS" by sequentially storing the generated structure data in the array "RECORDS". Alternatively, the execution unit 110 may generate the data group "RESULTS" by accumulating generated structure data in a temporary memory, and collectively storing the accumulated data in the array "RECORDS" when a predetermined number of structure data has accumulated.

Note that although, in the example shown in Fig. 2A, the data group includes array data in which a plurality of structure data are arrayed and number data indicating the number of structure data, the present invention is not limited thereto, and the data group need only include a plurality of structure data. As a result, however, of the data group taking such a structure, a plurality of generated structure data can be readily included in a data group because of the database access unit 120 being able to suitably create an SQL statement and the execution unit 110 needing only to store the generated structure data in an array, as will be discussed later.

Also, the array data may be a fixed-length array such as the example shown in Fig. 2A or a variable length array.

In the present embodiment, the control program that generates structure data and data groups is a user program that a user is able to input according to a desired purpose.

The user is, for example, able to set a user program in the programmable logic controller 100 by creating a user program using a programming tool on a personal computer that is connectable to the programmable logic controller 100 and inputting the created user program to the programmable logic controller 100.

Here, the programming tool creates the user program and generates definition data representing the definition of structure data to be used in the user program. The programming tool then inputs the definition data into the programmable logic controller 100 together with the user program. The user program and the definition data that are input to the programmable logic controller 100 are stored in the storage unit 130.

The format of the definition data is not particularly limited, and can be data such as shown in Fig. 2A, for example, that is, data defining the variable name of the structure data (in the example in Fig. 2A, "RESULTS") and each member name (in the example in Fig. 2A, "ID", "PTIME", "DATA1", and "DATA2"). Also, the definition data may further include mapping data defining the correspondence relation between the variable names of structure data and table names in the database 200 and the correspondence relation between member names of the structure data and field names of the tables in the database 200. In the following description, it is assumed that mapping data indicating that the variable name "RESULTS" of structure data corresponds to the table name "results storage table" is included.

Note that, as one modification, the control program that generates structure data and data groups may be a system program. In that case, definition data representing the definition of structure data to be used in the system program can be prestored in the storage unit 130.

As described above, the structure data includes members corresponding to respective fields of records in the database 200. The user program generates structure data corresponding to a record to be registered in the database 200. The definition data defines what field of the record the value of each member that is included in the structure data corresponds to. The database access unit 120 acquires the value of each field of the record to be registered in the database 200, with reference to the structure data and the definition data. The database access unit 120 is thereby able to register a desired record in the database 200.

### Database Access Unit

The database access unit 120 accesses the database, when a designated data group is called by the execution unit 110, or when a data group is generated by the execution unit 110.

The database access unit 120 first generates an SQL statement for manipulating a plurality of records, with reference to the plurality of structure data that are included in the data group generated by the execution unit 110 and the definition data stored in storage unit 130. The generation of an SQL statement will be discussed in detail later with examples.

The database access unit 120 determines the type of SQL statement (e.g., INSERT request for inserting a record, UPDATE request for updating a record, etc.) to be generated, depending on the called mode (e.g., depending on what function or method has been called by the user program).

The database access unit 120 then creates a template for an SQL statement of the determined type with reference to the definition data. For example, in the case of an SQL statement for an INSERT request, a template for the SQL statement can be created by inserting the variable name of the structure data extracted from the definition data into the position of <α> in the text "INSERT INTO <α> (<β>) VALUE (<γ>)", and enumerating the member names of the structure data that are extracted from the definition data at the position of <β>.

Also, in the case where mapping data defining the correspondence relation between the variable names of structure data and table names in the database 200 and the correspondence relation between member names of the structure data and field names of the tables in the database 200 is included in the definition data, the associated table name in the mapping data is inserted in place of the variable name of the structure data, and the associated field names in the mapping data are inserted in place of the member names of the structure data. In the case of the example shown in Fig. 2A, the template of an SQL statement such as "INSERT INTO RESULTS STORAGE TABLE (ID, PTIME, DATA1, DATA2) VALUE (<γ>)", for example, can thereby be generated.

Note that the database access unit 120 may be configured to create a template for an SQL statement whenever called, or to store a created template in the storage unit 130 when one template is created and reuse the stored template.

The database access unit 120 then creates an SQL statement by extracting the initial structure data from the data group, and inserting the value of each member of extracted structure data into the position of <γ> in the template for the SQL statement. This is performed on all the structure data that is included in the data group, and an SQL statement composed of a plurality of lines is created.

Alternatively, in the case where the DBMS of the database 200 supports special syntax for manipulating a plurality of records, the template for an SQL statement may be created so as to conform to that syntax and the value of each member of the plurality of structure data extracted from the data group may be inserted therein.

For example, a person skilled in the art will readily appreciate that with some DBMSs a plurality of records can be manipulated using an SQL statement composed of one line with the syntax "INSERT INTO <α > (<β>) VALUES (γ 1), (γ 2), ... (γn)" (where (γ 1), (γ 2) ... (γn) correspond to respective structure data), whereas with other DBMSs it is possible to register a plurality of records at one time using "BULK INSERT" processing.

Note that, in the present embodiment, a data group includes array data in which a plurality of structure data are arrayed and number data indicating the number of structure data. Thus, the database access unit 120 is able to recognize the number of structure data that are included in the data group, enabling control of the step of creating an SQL statement from the template for an SQL statement to be suitably performed repeatedly. Also, since the plurality of structure data are stored in array data, the database access unit 120 is readily able to read individual structure data.

According to the above, the database access unit 120 is able to create an SQL statement for manipulating a plurality of records corresponding to each of a plurality of structure data included in a data group.

The database access unit 120 accesses the database 200 by executing a generated SQL statement (includes transmitting the SQL statement to the DBMS of the database 200 and receiving a response corresponding to the transmitted SQL statement), and, as a result, is able to add or the like a plurality of records to the "results storage table" shown in Fig. 2B.

As described above, the database access unit 120 is able to generate an SQL statement from a data group, and thus according to the programmable logic controller 100, the database 200 can be manipulated without having to formulate SQL statements. Also, a plurality of structure data each defining a single record are included in a data group that is generated by the execution unit 110. Therefore, the database access unit 120 is able to recognize the plurality of records by referring to the data group. Also, the database access unit 120 is able to recognize the definitions of records by referring to the definition data of the structure data. The database access unit 120 is thereby able to generate an SQL statement for manipulating a plurality of records that respectively correspond to a plurality of structure data included in a data group, and is able to manipulate the plurality of records by executing the SQL statement. According to the programmable logic controller 100, a plurality of records can thereby be collectively manipulated with a simple structure, in a technology for manipulating a database without having to formulate SQL statements.

In particular, even in the case where the execution unit 110 generates structure data in a shorter interval than the time that the database access unit 120 takes to execute an SQL statement, the programmable logic controller 100 is able to successfully perform processing as a result of being able to collectively process a plurality of structure data.

That is, in the case where the execution unit 110 generates structure data in a shorter interval than the time that the database access unit 120 takes in order to execute an SQL statement, manipulation of a database could possibly fall behind if the data of records is set in a structure and the database is manipulated one record at a time, such as with the conventional technology. However, according to the programmable logic controller 100, a plurality of records can be manipulated collectively, and thus even if the execution unit 110 generates structure data in a shorter interval than the time that the database access unit 120 takes to execute an SQL statement, manipulation of the database 200 corresponding to the generated structure data can be performed successfully.

Note that the time that the database access unit 120 takes to execute an

SQL statement refers to the time needed to access the database 200 from the database access unit 120. In the present embodiment, the programmable logic controller 100 and the database 200 are at separate locations and are connected via a network, and thus it takes time to access the database 200 from the programmable logic controller 100. Thus, the execution unit 110 tends to generate structure data in a shorter interval than the time that the database access unit 120 takes to execute an SQL statement. Note that even with a configuration in which the programmable logic controller 100 is directly connected to the database 200 or in which the database 200 is provided in the programmable logic controller 100, it typically takes time for the database access unit 120 to execute an SQL statement, as compared with the original processing (control processing cycle) of the programmable logic controller 100. Thus, a situation can arise where the execution unit 110 generates structure data in a shorter interval than the time that the database access unit 120 takes to execute an SQL statement. Accordingly, the present invention is effective in any of these configurations.

Although not illustrated, the programmable logic controller 100 may be further provided with an OS execution unit for executing an operating system, an interface unit for input/output with respect to an external sensor or the like, a communication interface unit for communication with the database 200, a power supply unit, and the like.

Also, the database access unit 120 may be configured to store a result log of database access, and the storage unit 130 may be configured to temporarily store transmission data in the case where database access by the database access unit 120 is not successful. Also, as a modification, the storage unit 130 may store the database 200.

### Database Access Method

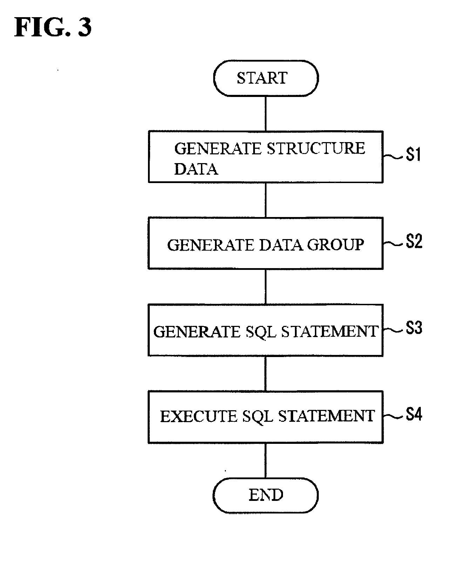

Fig. 3 is a flowchart illustrating a database access method according to the present embodiment. This database access method is executed by the programmable logic controller 100 capable of accessing the database 200.

The programmable logic controller 100 first generates structure data defining a single record, and generates a data group including a plurality of generated structure data (generation step). Specifically, in step S1, the execution unit 110 generates structure data defining a single record, and, in step S2, the execution unit 110 generates a data group including a plurality of generated structure data.

Next, the programmable logic controller 100 generates an SQL statement for manipulating a plurality of records, with reference to the plurality of structure data that are included in the data group generated in the generation step and definition data representing the definition of structure data, and executes the SQL statement (database access step). Specifically, in step S3, the database access unit 120 generates an SQL statement for manipulating a plurality of records, with reference to the plurality of structure data included in the data group generated by the execution unit 110 and definition data stored in the storage unit 130, and, in step S4, the database access unit 120 executes the SQL statement.

According to the above, a plurality of records can be collectively manipulated with a simple structure, in a technology for manipulating a database without having to formulate SQL statements. That is, an increase in efficiency can be achieved due to (1) being able to pass data as a collected data group when passing data from the execution unit 110 to the database access unit 120, rather than the conventional case of passing data one record at a time, and (2) being able to collectively carry out database manipulation instructions that are executed with a plurality of instructions from the database access unit 120 to the database 200 (DBMS).

### Modifications

Note that, as one modification, the programmable logic controller 100 may be configured such that the execution unit 110 generates structure data and the database access unit 120 implements a method of manipulating a single record as well as generating an SQL statement, with reference to the structure data and definition data of the structure data, similarly to the technology disclosed in WO/2013/191275. For example, a configuration may be adopted in which the database access method according to the present embodiment is implemented in the case where the interval in which the execution unit 110 generates structure data is short, and the method according to the conventional technology is implemented in the case where the interval in which the execution unit 110 generates structure data is long.

### Embodiment 2

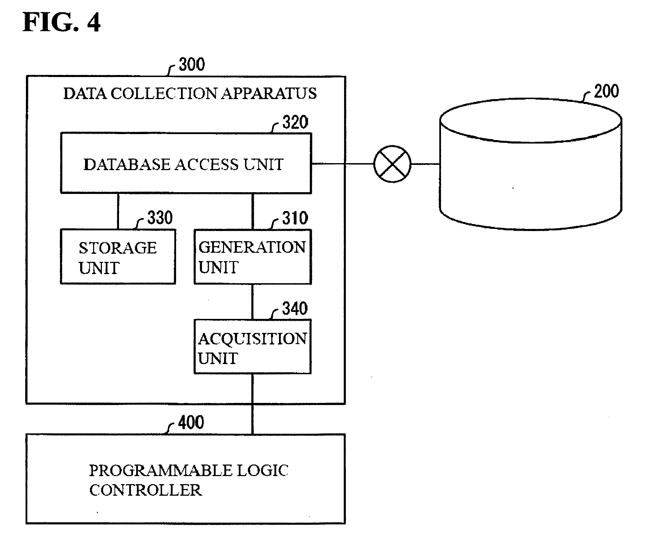

Also, the present invention, in another embodiment (Embodiment 2), provides a data collection apparatus connected to a programmable logic controller and capable of accessing a database. Fig. 4 is a block diagram showing a schematic configuration of a data collection apparatus 300 according to Embodiment 2. As shown in Fig. 4, the data collection apparatus 300 is connected to a programmable logic controller 400 and a database 200. The database 200 has the same function as Embodiment 1. The programmable logic controller 400 acquires data from an external sensor or the like, and outputs the acquired data to the data collection apparatus 300.

The data collection apparatus 300 is a computer, such as an IPC (Industrial Personal Computer), for example, and is provided with a generation unit 310, a database access unit 320, a storage unit 330, and an acquisition unit 340.

The acquisition unit 340 acquires, from the programmable logic controller 400, data that the programmable logic controller 400 has acquired from an external sensor or the like, and outputs the acquired data to the generation unit 310. The timing at which the acquisition unit 340 acquires data from the programmable logic controller 400 is not particularly limited, and acquisition can be executed periodically or aperiodically. Also, a configuration may be adopted in which data is notified to the acquisition unit 340 from the programmable logic controller 400 side in an event-like manner.

The generation unit 310 generates structure data defining a single record to be registered in the database 200 based on the data acquired by the acquisition unit 340, and generates a data group including a plurality of generated structure data. The generation unit 310 then designates the generated data group and calls the database access unit 320, in order to access the database 200.

The generation unit 310 is able to generate a data group and to call the database access unit 320 using similar methods to the execution unit 110 of the programmable logic controller 100 in Embodiment 1. That is, the generation unit 310 may execute a control program and perform generation of a data group and calling of the database access unit 320, in accordance with a cycle time.

Also, definition data is stored in the storage unit 330, similarly to the storage unit 130 of the programmable logic controller 100 in Embodiment 1.

Also, the database access unit 320 is able to generate and execute an SQL statement using a similar method to the database access unit 120 of the programmable logic controller 100 in Embodiment 1.

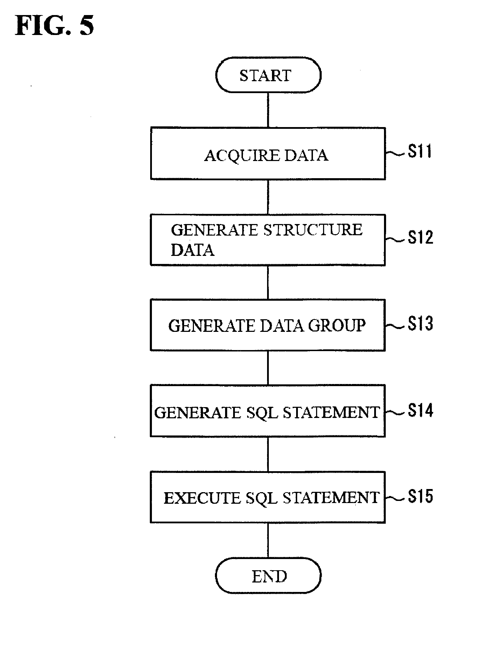

Fig. 5 is a flowchart illustrating a database access method according to the present embodiment. This database access method is executed by the data collection apparatus 300 connected to the programmable logic controller 400 and capable of accessing the database 200.

The data collection apparatus 300 first acquires data from the programmable logic controller 400 (acquisition step). Specifically, in step S11, the acquisition unit 340 acquires, from the programmable logic controller 400, data that the programmable logic controller 400 has acquired from an external sensor or the like.

Next, the data collection apparatus 300 generates structure data defining a single record from the data acquired in the acquisition step, and generates a data group including a plurality of generated structure data (generation step). Specifically, in step S12, the generation unit 310 generates structure data defining a single record from the data acquired by the acquisition unit 340 from the programmable logic controller 400, and, in step S13, the generation unit 310 generates a data group including a plurality of generated structure data.

Next, the data collection apparatus 300 generates an SQL statement for manipulating a plurality of records, with reference to the plurality of structure data included in the data group generated in the generation step and definition data representing the definition of the structure data, and executes the SQL statement (database access step). Specifically, in step S14, the database access unit 320 generates an SQL statement for manipulating a plurality of records, with reference to the plurality of structure data that are included in the data group generated by the generation unit 310 and definition data stored in the storage unit 330, and, in step S15, the database access unit 320 executes the SQL statement.

According to the above, a plurality of records can be collectively manipulated with a simple structure, in a technology for manipulating a database without having to formulate SQL statements.

### Exemplary Realization using Software

The control blocks of the programmable logic controller 100 and the data collection apparatus 300 (in particular, the execution unit 110, the database access unit 120, the generation unit 310, the database access unit 320, and the acquisition unit 340) may be realized by a logic circuit (hardware) formed in an integrated circuit (IC chip) or the like, or may be realized by software using a CPU (Central Processing Unit).

In the latter case, the programmable logic controller 100 and the data collection apparatus 300 are provided with a CPU that executes instructions of a database access program which is software that realizes the respective functions, a ROM (Read Only Memory) or storage device (these are referred to as "recording media") on which the database access program and various data are recorded in a manner readable by a computer (or CPU), and a RAM (Random Access Memory) in which the program is expanded. The object of the present invention is attained as a result of the computer (or CPU) reading out the database access program from the recording medium and executing the read database access program. As the recording medium, a "non-transitory tangible medium" such as a tape, a disk, a card, a semiconductor memory or a programmable logic circuit, for example, can be used. Also, the database access program may be supplied to the computer via a suitable transmission medium (communication network, broadcast wave, etc.) capable of transmitting the database access program. Note that the present invention can also be realized in the form of a data signal embedded in a carrier wave, whereby the database access program is embodied through electronic transmission.

The present invention is not limited to the abovementioned embodiments, and various modifications can be made within the scope described in the claims. Embodiments that are obtained by appropriately combining the technical means disclosed in the different embodiments are included in the technical scope of the present invention.

The present invention can be used in a programmable logic controller and a peripheral device thereof.

### LIST OF REFERENCE NUMERALS

- 100: programmable logic controller
- 110: execution unit (generation unit)
- 120: database access unit
- 130: storage unit
- 200: database
- 300: data collection apparatus
- 310: generation unit
- 320: database access unit
- 330: storage unit
- 340: acquisition unit
- 400: programmable logic controller

## Claims

1. A programmable logic controller (100) configured to access a database, the controller (100) comprising:
a generation unit (110) configured to generate structure data defining a single record, and to generate a data group including a plurality of the generated structure data;
a storage unit (130) configured to store definition data representing a definition of the structure data; and
a database access unit (120) configured to generate an SQL statement for manipulating a plurality of records, with reference to the plurality of structure data included in the data group generated by the generation unit (110) and the definition data stored in the storage unit (130), and to execute the SQL statement.

2. The programmable logic controller (100) according to claim 1,
wherein the data group includes array data in which the plurality of structure data are arrayed and number data indicating a number of the plurality of structure data.

3. The programmable logic controller (100) according to claim 1 or 2,
wherein the generation unit (110) is configured to generate the structure data in a shorter interval than a time that the database access unit (120) takes to execute the SQL statement.

4. The programmable logic controller (100) according to any one of claims 1 to 3,
wherein the SQL statement requests insertion or updating of the plurality of records.

5. A data collection apparatus (300) configured to be connected to a programmable logic controller (400) and to access a database, the apparatus (300) comprising:
an acquisition unit configured to acquire data from the programmable logic controller (400);
a generation unit (310) configured to generate structure data defining a single record from the data acquired by the acquisition unit, and to generate a data group including a plurality of the generated structure data;
a storage unit (330) configured to store definition data representing a definition of the structure data; and
a database access unit (320) configured to generate an SQL statement for manipulating a plurality of records, with reference to the plurality of structure data included in the data group generated by the generation unit (310) and the definition data stored in the storage unit (330), and to execute the SQL statement.

6. A database access method of a programmable logic controller (100) configured to access a database, the method comprising:
a generation step of the programmable logic controller (100) generating structure data defining a single record, and generating a data group including a plurality of the generated structure data; and
a database access step of the programmable logic controller (100) generating an SQL statement for manipulating a plurality of records, with reference to the plurality of structure data included in the data group generated in the generation step and definition data that represents a definition of the structure data, and executing the SQL statement.

7. A database access program for causing a programmable logic controller (100) configured to access a database to execute:
a generation step of generating structure data defining a single record, and generating a data group including a plurality of the generated structure data; and
a database access step of generating an SQL statement for manipulating a plurality of records, with reference to the plurality of structure data included in the data group generated in the generation step and definition data that represents a definition of the structure data, and executing the SQL statement.

8. A database access method of a data collection apparatus (300) configured to be connected to a programmable logic controller (400) and to access a database, the method comprising:
an acquisition step of the data collection apparatus (300) acquiring data from the programmable logic controller (400);
a generation step of the data collection apparatus (300) generating structure data defining a single record from the data acquired in the acquisition step, and generating a data group including a plurality of the generated structure data; and
a database access step of the data collection apparatus (300) generating an SQL statement for manipulating a plurality of records, with reference to the plurality of structure data included in the data group generated in the generation step and definition data that represents a definition of the structure data, and executing the SQL statement.

9. A database access program for causing a computer connected to a programmable logic controller (400) and configured to access a database to execute:
an acquisition step of acquiring data from the programmable logic controller (400);
a generation step of generating structure data defining a single record from the data acquired in the acquisition step, and generating a data group including a plurality of the generated structure data; and
a database access step of generating an SQL statement for manipulating a plurality of records, with reference to the plurality of structure data included in the data group generated in the generation step and definition data that represents a definition of the structure data, and executing the SQL statement.
